# EUROPEAN PATENT SPECIFICATION

(11) **EP 1 060 062 B1**
(45) Date of publication and mention of the grant of the patent: **12.02.2003**
(21) Application number: 99909698.5
(22) Date of filing: 26.02.1999
(51) Int. Cl.: B29B 17/00, B29B 9/00, B29B 9/02, B02C 18/44

(54) **RADIAL GRANULATOR**
RADIALGRANULATOR
GRANULATEUR RADIAL

(30) Priority: 27.02.1998 US 76209 P
(43) Date of publication of application: 20.12.2000
(73) Proprietor: Maguire Products, Inc., Aston, PA 19014 (US)
(72) Inventor: MAGUIRE, Stephen, B., Glen Mills, PA 19432 (US)
(74) Representative: Beissel, Jean
(86) International application number: US9904436
(87) International publication number: WO99043480

(56) References cited:
- EP-A- 0 135 356
- DE-A- 4 105 375
- DE-A- 4 333 849
- DE-A- 4 410 496
- DE-A- 4 440 769
- DE-U- 9 409 906
- DE-U- 29 509 271
- DE-U- 29 721 670
- GB-A- 2 120 969
- US-A- 3 418 694
- US-A- 5 692 686
- KORNMAYER H: "ANGUESSE UND AUSSCHUSS-TEILE MIT MUEHLEN WIEDERVERWERTEN" PLASTVERARBEITER, vol. 41, no. 7, 1 July 1990, page 96, 98, 100, 102 XP000161498
- HESS V: "CORRECT DESIGN OF GRANULATORS FOR INJECTION MOULDING PLANTS" PE PLAST EUROPE, no. 5, 1 October 1992, page 524, 525, 528 XP000329409

## Description

### Field of the Invention

This invention relates to reprocessing for recycling of solid thermo-plastic waste materials resulting from unsuccessful plastic molding operation and to the processing for recycling of solid plastic mold runners and sprues produced in the ordinary course of plastic injection or compression molding.

### Background of the Invention

The plastics molding industry uses granulators to recycle discarded scrap materials which are produced incident to the production of injection molded or compression molded plastic products and for recycling defective molded products, where molding has been unsuccessful due to incomplete fill of the mold or unsatisfactory conditions within the mold.

Many plastic resin materials used in compression and injection molding may be repeatedly melted and formed. Thus, if a molded part is formed incorrectly or the desired shade of color is not obtained, the part can be ground into small granular particles and processed again.

In addition to scrap and malformed parts, parts are sometimes molded attached to a runner, which is a solid plastic tree connecting together two or more parts produced in separate cavities in the same mold. These runners may also be recycled; manufacturers utilize granulators to do this.

Sprues are solid plastic material resulting from cooling of molten plastic material in one or more passageways between the mold cavities in which the plastic parts are formed and the point of introduction of molten plastic material into the molding machine.

Granulators are normally selected based on the size(s) of the parts the granulator must ingest and the maximum throughput of such parts in pounds per hour. In a plastic molding facility there is often one granulator beside every molding press, with the granulator dedicated to grinding and returning to the process defective parts molded on that press as well as runners and sprues resulting in the molding process.

The requirements of such a small granulator are very low throughput, less than one hundred (100) pounds per hour under the most demanding circumstances, and to accept parts which have a maximum dimension of from six (6) to ten (10) inches in any direction.

Known granulators employ a reel-type blade assembly similar to that of a reel-type lawn mower. Such conventional granulators typically have two heavy side plates with bearings. Connecting these plates are heavy cross bars which hold bed knives, which are generally two (2) in number, positioned on opposite sides of the reel axis and oriented parallel to the axis of rotation of the reel. Journaled in the bearings retained by the side plates is a reel which is heavy and holds reel knives which are generally three (3) and sometimes five (5) in number. Plastic material to be granulated and recycled enters the cutting region perpendicular to the axis of reel rotation.

In such known granulators, distance between the side plates may be about twelve (12) inches and the cutting circle diameter may also typically be about twelve (12) inches. Hence the knives are about twelve (12) inches long. The possibility of making a single twelve (12) inch long cut, along the full length of a blade, in one hit on a single plastic part, determines the required power capacity for the motor, typically 5 or 10 horsepower even if gear reduction is used. Flywheels are often utilized to aid the motor in the cutting process.

A screen is fitted under the cutting chamber so only small particles escape the turning reel knives as the material churns within the cutting chamber. The cut material reduced to the small size passes out of the bottom through holes in the screen which are typically about one-quarter (1/4) inch diameter and can be from one-eighth (1/8) inch diameter up to about three-quarters (3/4) inch diameter, depending on the size of granules to be produced.

A granulator for plastic material of a different type is disclosed in DE-U1-9409906. It comprises a housing defining a downwardly leading chute and a granulating assembly located within said housing. The granulating assembly comprises a horizontal cutting chamber with horizontal base plate, a transversely elongated cutting rotor mounted therein and a plurality of fixed cutting knife blades defining a circular array. A portion of the cutting chamber is formed by a perforated plate, so that shredded plastics material can quit the cutting chamber through the apertures of the perforated plate. In this device, the cutting rotor is arranged hoizontally, i.e. rotates about a vertical shaft. A motor having a vertical shaft is arranged offset to the rotor shaft and operatively connected to the rotor shaft by means of a belt.

### Summary of the Invention

A radial granulator apparatus is provided wherein the cutting chamber is oriented such that material enters in a direction essentially parallel with the axis of rotor rotation. The granulator includes a cabinet, a motor, a rotor mounted on the motor shaft for rotation defining a cutting path, knives attached to the rotor, a filter ring circumscribing the rotor cutting path and having a plurality of stationary knives positioned therearound, an exit ring assembly behind the filter ring for channeling plastic materials of less than a specific size away from the cutting path and a storage bin for collecting granulated plastic material passing through the filter ring.

A feed hopper, at the top of the granulator, preferably has an offset opening that reduces "flyback" of particulate granular material resulting from granulating cutting taking place below. The lower portion of an internal hopper is configured to guide all material into a cylindrical cutting chamber. The cutting ring knives are stationary, being bolted to a flat base plate. A cutting ring with pockets receiving the knives fits over the knives, contacts the base plate and defines the cutting chamber.

The cylindrical cutting chamber permits use of a single bearing, a closely coupled direct drive motor and knives with very short cutting edges which are mounted on the rotor ends.

The rotor is preferably positioned facing somewhat upwardly, towards the path of material downward flow, while the filter is positioned around the circumference of the rotor cylindrical cutting path. A filter ring slips into place and is easily lifted out in a direction parallel to the rotor axis for cleaning. There may be three areas for material to exit, which are arcuate areas between the three stationary knives.

The filter is preferably a single steel ring, preferably notched to fit over the stationary cutting ring knives with arcuate trunco-cylindrical areas between the notches apertured for desired granular size. The apertured portion of the filter ring preferably traverses two-thirds (2/3) of the circumference of the rotor cylindrical cutting zone. The apertures can be extended to traverse a full 360°, namely the entire circumference of the cylindrical cutting path. However, since the cutting chamber is preferably slant positioned, the top one third (1/3) contributes little to throughput of granules so aperatures may not be included in that portion.

As defined in claim 1, this invention may be considered to provide a granulator including a housing having a scrap plastic material intake proximate an upper extremity thereof, with the upper extremity of the housing defining a downwardly leading chute for solid molded plastic material to be granulated and recycled. Preferably there is a baffle within the chute for at least partially laterally deflecting downwardly falling solid molded scrap plastic material to be granulated. A motor is connected to the housing and is preferably oriented with the shaft of the motor skew to the vertical.

The granulator further includes a granulating assembly located within the housing and having a transversely elongated rotor connected to the shaft of the motor for rotation therewith. A first plurality of cutting knife blades are connected to the rotor at transverse extremities thereof and are oriented with cutting edges of the blades parallel with the motor shaft. A base plate has the motor shaft rotatably journaled therewithin.

A second plurality of cutting knife blades define a circular array connected to the base plate and upstanding therefrom with cutting edges oriented in a direction parallel both with the motor shaft and with the first plurality of cutting knife blade edges. An apertured ring includes notches therein for fitting around and over the second plurality of cutting knife blades.

Annular trunco-cylindrical back plates are supported by the base plate and are positioned radially outboard of the aperatured ring and axially substantially aligned with the apertured ring for deflecting granules of plastic material, resulting from cutting action of the first and second pluralities of cutting knife blades, passing through the aperatured ring downwardly for collection by a storage bin. The storage bin is at the bottom of and within the housing.

### Brief Description of the Drawings

Figure 1 is a side schematic view of a radial granulator manifesting aspects of the invention showing the preferred orientation of the granulating motor assembly and material intake path.

Figure 2 is a diagrammatic perspective view of the granulating assembly of the radial granulator illustrated in Figure 1.

Figure 3 is a front schematic view of a radial granulator manifesting aspects of the invention as illustrated generally in Figures 1 and 2, with internal parts shown in dotted lines in schematic form.

### Detailed Description of the Preferred Embodiments and Best Mode Known for Practicing the Invention

The radial granulating apparatus of this invention provides a cutting chamber is oriented such that material enters from a direction forward of the cutting chamber and in a direction parallel to the axis of granulating blade rotation. The granulator apparatus is designed for use with thermoformable materials such as plastics. The apparatus includes a cabinet, a motor, a rotor mounted on the motor shaft for rotation about a cutting path, knife attachments for the rotor, a filter ring circumscribing the rotor cutting path with a plurality of stationary knives positioned therearound, an exit ring assembly positioned behind the filter ring for channeling plastic materials less than a specific size away from the cutting path, and a storage bin for collecting granulated plastic material passed through the filter assembly.

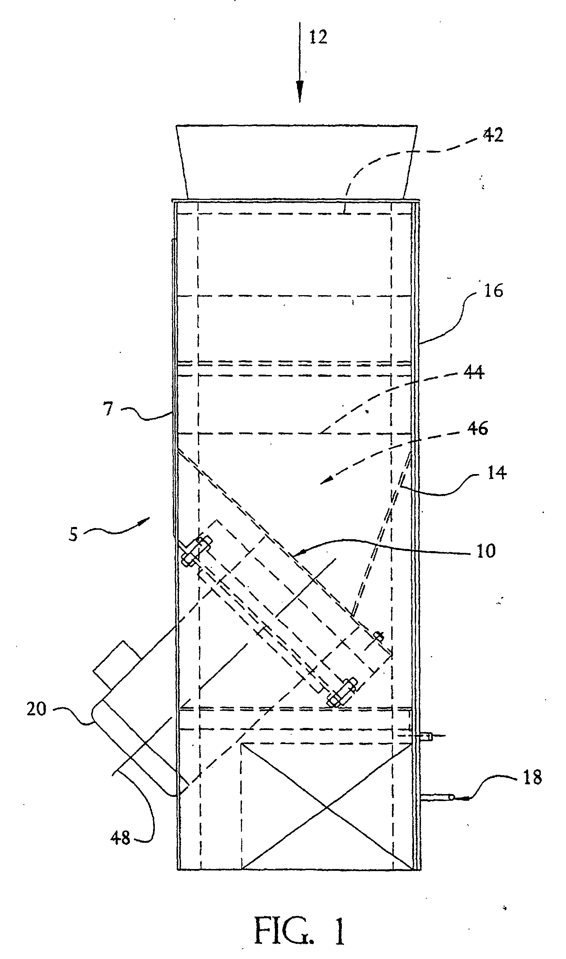

Referring now to Figure 1 a radial granulator manifesting aspects of the invention is designated generally 5. The radial granulator includes a cabinet 7 for housing an electromechanical granulating assembly, which is designated generally 10. The cabinet is typically manufactured of galvanized sheet metal. An upper portion of cabinet 7 is formed to channel materials along an intake path 12 downwardly to the granulating assembly 10 which is driven by a motor 20.

The top of the radial granulator cabinet 7, has an offset opening denoted by horizontal lines 42, 44 that aids in reducing "flyback" of granulated plastic material resulting from the cutting action below. The lower portion of an internal hopper 46 having an upper extremity defined by offset line 44 guides downwardly falling plastic material to be granulated for recycling into a cutting chamber directed by internal baffle 14 for orienting intake materials such that they enter the cutting chamber of granulating assembly 10 from a direction parallel to the axis of blade rotation as indicated by directional arrow A in Figure 1. The axis of rotation of the output shaft of motor 20 is designated 48 in Figure 1. Cabinet 7 additionally includes a front access panel 16 for accessing the portion of intake path 12 within and accessing storage bin 18 which collects granulated plastic material provided to it by granulating assembly 10.

The electromechanical granulating assembly 10 is typically powered by an alternating current source of 120-240 volts, depending on the requirements of motor 20 driving granulating assembly 10. In the preferred embodiment, the motor is of low horsepower, typically a three (3) horsepower motor.

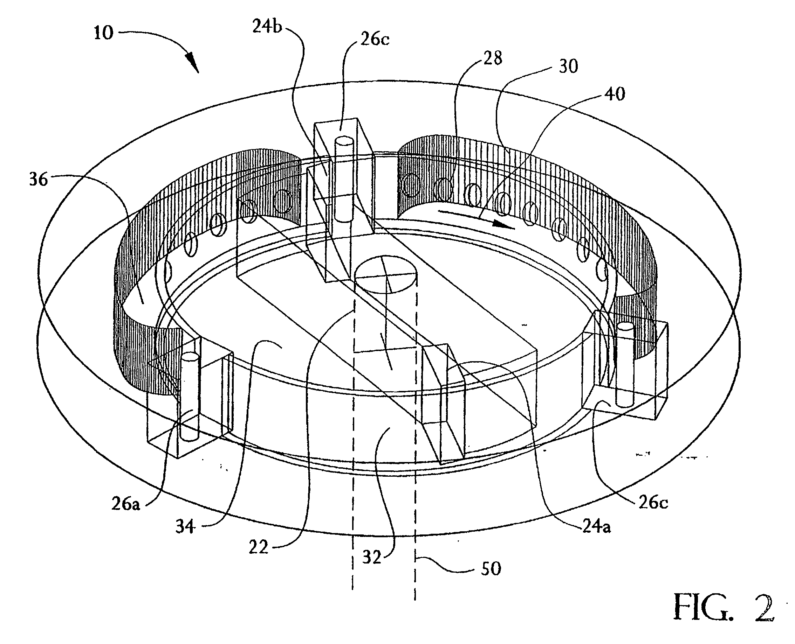

Referring now to Figure 2, granulating assembly 10 includes rotor 22 mounted on an output shaft 50 of motor 20. Granulating assembly 10 further includes a filter ring 32 which is of annular configuration and is preferably notched to fit over stationary knives 26a, 26b and 26c, which are preferably fixably connected to base plate 34. In the preferred embodiment of the invention, knives 24a, 24b, 26a, 26b, 26c are about one and three-quarters (1 3/4) inches high where this dimension is measured in the axial direction parallel with the axis of rotation of motor 20. Motor 20 is not illustrated in Figure 2.

A cutting chamber is of cylindrical configuration and is defined by the annular inwardly facing surface of filter ring 32 which fits about stationary knives 26a, 26b and 26c. In the preferred practice of the invention, the cutting chamber has a diameter of about ten (10) inches and may be as high as fifteen (15) inches.

Rotor 22 is preferably a two (2) inch square steel bar and is preferably about nine (9) inches long with knives 24a, 24b at either end positioned to essentially tangentially contact the annular inwardly facing surface of filter ring 32. Note that stationary knives 26a, 26b and 26c are disposed essentially radially with respect to the axis of rotation of motor output shaft 50, as illustrated in Figure 2, whereas knives 24a, 24b mounted at the transverse extremities of rotor 22 are canted with respect to rotor 22. This canted position effectively serves to trap solid plastic material to be recycled between cutting edges of moving knives 24a, 24b and stationary knives 26a, 26b and 26c as rotor 22 rotates thereby causing this material to be cut between the edges of the knives into small granules. The small granules then pass through apertures 28 in filter ring 32 and pass downwardly between filter ring 32 and exit ring 30 falling into a storage bin 18 positioned below the granulator assembly.

A bearing locates and connects rotor 22 to ring 32 through a base plate 34.

Motor 20 has a shaft 50 operably connected to rotor 22. The ends of rotor 22 moves along cutting path 40; ends of rotor 22 have knives 24a and 24b secured thereto for sweeping rotary movement along cutting path 40.

The cutting path 40 of knives 24a and 24b is circular, bounded by filter ring 32. Filter ring 32 is preferably a single steel band, preferably notched to fit over stationary knives 26a, 26b, 26c.

The portions of filter ring 32 between the stationary knife notches have a plurality of apertures of diameter consistent with the largest size granule desired to be passed by granulating assembly 10. The aperture portion of the filter ring preferably traverses two-thirds (2/3) around the rotor cutting path. In an alternative embodiment, apertures may traverse the full 360° of cutting path 40; however, the orientation of the granulating assembly 10 in the preferred embodiment has motor shaft 50 sloped so that the top one-third (1/3) of the cutting path contributes little to throughput.

Stationary knives 26a, 26b, 26c are secured to base plate 34 and spaced symmetrically therearound for granulating cooperation with knives 24a, 24b carried by rotor 22.

Exit ring 30 is positioned behind filter ring 32 such that channels 36 are formed between the apertured portions of the filter ring 32 and exit ring 30. Channels 36 provide a path, which may pass through base plate 34, to storage bin 18 positioned underneath, for the passage of granules of having a maximum dimension corresponding to that of apertures of filter ring 32.

Plastic material flowing along intake path 12 is directed towards granulating assembly 10 in a direction parallel to the axis of rotation of rotor 22, which is defined by motor shaft 50, for granulation into granules of a size having a maximum dimension corresponding to that of the apertures of filter ring 32. The granules pass through the apertured portion of filter ring 32 down through exit channel 36 to storage bin 18.

In one preferred practice of the invention, moving in stationary knives 24a, 24b, 26a, 26b, 26c are one and three-quarters (1 + 3/4) inches long with length being measured in a direction parallel to the axis of rotation of rotor 22 on which moveable knives 24a, 24b are mounted. In this preferred practice of the invention, motor 20 is a three (3) horsepower and the cutting chamber defined by filter ring 32, exit ring 30 and base plate 34 has a ten (10) inch inside diameter measured at the annular inwardly facing surface of filter ring 32, a fifteen (15) inch outside diameter measured at the outer annular surface of base plate 34 at a height of one and three-quarters (1 + 3/4) inches measured and parallel to the axis of rotation of motor 20. In this preferred practice of the invention, rotor 22 is a two (2) inch square steel bar of nine (9) inches in length with knives 24a, 24b located at either end of rotor 22. Knives 24a, 24b are preferably canted with respect to rotor 22 so as to form an angle of about eighty degrees (80°) at the point of tangency and close approach to filter ring 32. This is to be contrasted to stationary knives 26 which preferably form an angle of ninety degrees (90°) with the inner surface of filter ring 32.

The geometry of cutting chamber 62 defined by filter ring 32, base plate 34, rotor 22 and knives 24a, 24b, 26a, 26b, 26c permits feed of the plastic material to be recycled in a direction essentially parallel to the axis of rotation of rotor 22.

This geometry and the resultant mechanical advantage inherent in the geometrical design facilitates use of lower horsepower motors than known heretofore in the granulating art thereby providing for a lower cost granulator apparatus.

Stationary knives 26 are preferably bolted to base plate 34. Filter ring 32 having pockets formed therein for fitting over stationary knives 36 fits over top of stationary knives 36 and flushly abuts base plate 34. Filter ring 32 is retained in place by internal hopper 46 which bears downwardly against the upwardly facing surface of filter ring 32.

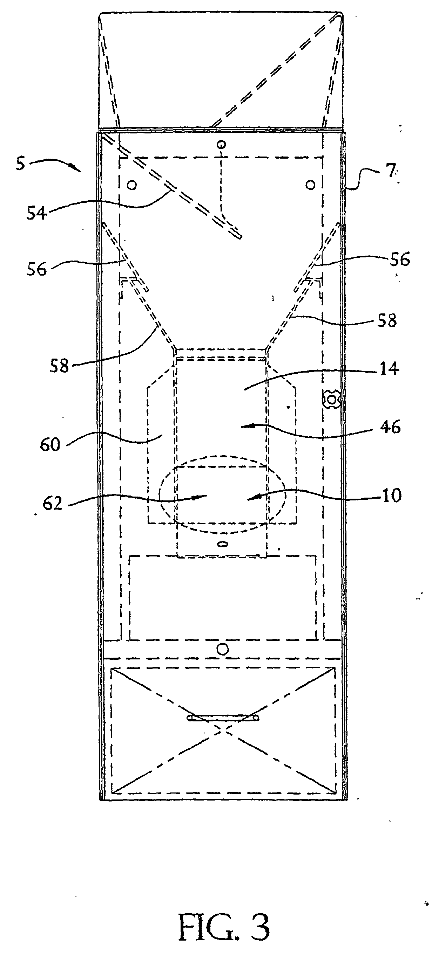

As illustrated in Figure 3 in schematic form, internal hopper 46 is suspended from frame members internal of cabinet 7 via hopper suspension plates 58 and, as noted above, essentially rests on the upper surface of filter ring 32 thereby retaining filter ring 32 in place as the granulating process proceeds. Internal hopper 46 includes internal baffle 14 and hopper side plates 60. The suspension of internal hopper 46 via hopper suspension plates 58 allows internal hopper 46 to be lifted out of cabinet 7 when it is desired to clean the apparatus or it is desired to change filter ring 32 to produce a different size of granular material for recycling.

As further illustrated in Figure 3, a pair of guide plates 56 are located above internal hopper 46 and serve to downwardly channel flow of solid molded plastic material to be recycled downwardly into the cutting chamber 62.

In the geometry of the cutting chamber, the ratio of knife edge length to cutting circle diameter is considerably less than one to one; it is this ratio which affects the power required to be supplied by motor 20 and thereby facilitates the mechanical advantage and resultant efficiency provided by the granulator embodying the invention.

Cabinet 7 further preferably includes a front door, which is interlocked with the power to motor 20, for safety purposes and opens for easy access to the interior of the cutting chamber. Internal hopper 46 may be removed via this door. Once the interior hopper 46 is removed, filter ring 32 may be replaced or cleaned as desired.

The inlet to internal hopper 46 is offset from an inlet for plastic material to be recycled into the granulator where this inlet is defined by an extremity of upper deflector plate 54 illustrated in Figure 3. Upper deflector plate 54 and its extremities serves to force incoming solid plastic material to be granulated laterally and serves to largely block flyback thereby preventing solid plastic material from flying out of the granulator material via the upper, preferably open feed aperture at the top of the granulator.

## Claims

1. A granulator (5) comprising:
a. a housing (7) having a scrap plastic material intake (12) proximate an upper extremity thereof;
b. the upper interior of said housing (7) defining an downwardly leading chute for scrap plastic material to be granulated;
c. a motor (20) connected to said housing (7);
d. a granulating assembly (10) located within said housing (7) and comprising:
i. a transversely elongated rotor (22) connected to the shaft (50) of said motor (20) for rotation therewith;
ii. a first plurality of cutting knife blades (24a, 24b) connected to said rotor (22) at transverse extremities thereof and oriented with cutting edges of said blades parallel with said motor shaft;
iii. a base plate (34) having said motor shaft (50) rotatably journaled therewithin;
iv. a second plurality of cutting knife blades (26a, 26b, 26c) defining a circular array, connected to said baseplate (34) and upstanding therefrom with cutting edges oriented in a direction parallel with said motor shaft (50) and said first plurality of cutting knife blade edges;
v. an apertured ring (32) including notches therein for fitting around said second plurality of cutting knife blades (26a, 26b, 26c);
e. a storage bin (18) being at the bottom of and within said housing; **characterized by**
f. the shaft (50) of said motor (20) being skew to the vertical and
g. at least one annular trunco-cylindrical backplate adjoining said baseplate (34), positioned radially outboard of said apertured ring (32) and axially substantially aligned therewith for deflecting granules of plastic material, resulting from cutting action of said first and second pluralities of cutting knife blades, passing through said apertured ring (32) downwardly for collection by said storage bin (18).

2. The granulator of claim 1, further comprising a baffle (14) within said chute for at least partially laterally deflecting downwardly falling solid scrap plastic material to be granulated.

3. The granulator of claim 1 or 2 wherein apertures (28) in said ring circumscribe an angle of 240°.

4. The granulator of claim 1 or 2 wherein apertures in said ring circumscribe an angle of 360°.

5. The granulator according to any one of claims 1 to 4, wherein said second plurality of cutting knife blades is greater in number than said first plurality.

6. The granulator according to any one of claims 1 to 5 wherein said knife blades of said first and second pluralities are substantially the same length.

7. The granulator according to any one of claims 1 to 6 wherein said knife blades have axial length less than one-fourth (1/4) transverse length of said rotor.

8. The granulator of claim 3 or 4 wherein said apertured portion of said ring is symmetrical about a vertical axis and faces downwardly.

## Patentansprüche

1. Granulator (5), umfassend:
a. ein Gehäuse (7) mit einer Abfallkunststoffmaterialaufnahme (12) nahe einem oberen äußersten Ende desselben;
b. das obere Innere des Gehäuses (7), das eine nach unten führende Gleitbahn für zu granulierendes Abfallkunststoffmaterial bildet;
c. einen Motor (20), der mit dem Gehäuse (7) verbunden ist;
d. eine Granulieranordnung (10), die in dem Gehäuse (7) angeordnet ist und umfaßt:
i. einen in Querrichtung langgestreckten Rotor (22), der mit der Welle (50) des Motors (20) zwecks Drehung mit diesem verbunden ist;
ii. eine erste Vielzahl von Schneidmesserklingen (24a, 24b), die mit dem Rotor (22) an quergerichteten äußersten Enden desselben verbunden sind und mit Schneidkanten der Klingen parallel mit der Motorwelle ausgerichtet sind;
iii. eine Basisplatte (34), in der die Motorwelle (50) drehbar gelagert ist;
iv. eine zweite Vielzahl von Schneidmesserklingen (26a, 26b, 26c), die eine kreisförmige Anordnung bilden, mit der Basisplatte (34) verbunden sind und von dieser nach oben stehen, wobei Schneidkanten in einer Richtung parallel mit der Motorwelle (50) und der ersten Vielzahl von Schneidmesserklingenkanten ausgerichtet sind;
v. einen mit Löchern versehenen Ring (32), der Kerben aufweist, damit er um die zweite Vielzahl von Schneidmesserklingen (26a, 26b, 26c) paßt;
e. einen Aufnahmebehälter (18), der am Boden des Gehäuses und in dem Gehäuse ist;
**dadurch gekennzeichnet, daß**
f. die Welle (50) des Motors (20) schräg zur Vertikalen ist und
g. mindestens eine ringförmige, zylinderstumpfförmige Stützplatte vorhanden ist, die an die Basisplatte (34) angrenzt, radial außerhalb des mit Löchern versehenen Rings (32) positioniert ist und im wesentlichen axial mit diesem ausgerichtet ist, zum Ablenken der Körnchen aus Kunststoffmaterial, die durch den Schneidvorgang der ersten und zweiten Vielzahl von Schneidmesserklingen entstehen und durch den mit Löchern versehenen Ring (32) nach unten zum Aufnehmen in dem Aufnahmebehälter (18) geführt werden.

2. Granulator nach Anspruch 1, ferner umfassend eine Prallplatte (14) in der Gleitbahn zum zumindest partiellen seitlichen Ablenken des nach unten fallenden, festen, zu granulierenden Abfallkunststoffmaterials.

3. Granulator nach Anspruch 1 oder 2, wobei Löcher (28) in dem Ring einen Winkel von 240° überspannen.

4. Granulator nach Anspruch 1 oder 2, wobei Löcher in dem Ring einen Winkel von 360° überspannen.

5. Granulator nach einem der Ansprüche 1 bis 4, wobei die zweite Vielzahl von Schneidmesserklingen zahlreicher ist als die erste Vielzahl.

6. Granulator nach einem der Ansprüche 1 bis 5, wobei die Messerklingen der ersten und zweiten Vielzahl im wesentlichen die gleiche Länge haben.

7. Granulator nach einem der Ansprüche 1 bis 6, wobei die Messerklingen eine Axiallänge haben, die kleiner ist als ein Viertel (1/4) der Querlänge des Rotors.

8. Granulator nach Anspruch 3 oder 4, wobei der mit Löchern versehene Abschnitt des Rings um eine vertikale Achse symmetrisch und nach unten gewandt ist.

## Revendications

1. Granulateur (5), comprenant :
a. un carter (7) ayant une entrée pour déchets de matière plastique (12) à proximité de son extrémité supérieure ;
b. la partie supérieure de l'intérieur dudit carter (7) définissant une goulotte menant vers le bas pour les déchets de matière plastique à réduire ;
c. un moteur (20) connecté audit carter (7);
d. un ensemble réducteur (10) placé à l'intérieur dudit carter (7) et comprenant :
i. un rotor allongé transversalement (22) relié à l'arbre (50) dudit moteur (20) pour rotation avec celui-ci ;
ii. une première pluralité de lames de coupe (24a, 24b) reliées audit rotor (22) à ses extrémités transversales et orientées avec les arêtes de coupe desdites lames parallèles audit arbre de moteur ;
iii. une plaque de base (34) dans laquelle ledit arbre de moteur (50) est monté sur palier pour rotation ;
iv. une deuxième pluralité de lames de coupe (26a, 26b, 26c) définissant un réseau circulaire, reliées à ladite plaque de base (34) et se redressant de là avec des arêtes de coupe orientées dans une direction parallèle audit arbre de moteur (50) et à ladite première pluralité d'arêtes de lames de coupe ;
v. une bague à ouvertures (32) comprenant des encoches pour adaptation autour de ladite deuxième pluralité de lames de coupe (26a, 26b, 26c) ;
e. un réservoir de stockage (18) placé en bas et à l'intérieur dudit carter ; **caractérisé par** :
f. l'arbre (50) dudit moteur (20) étant incliné par rapport à la verticale, et
g. au moins une plaque de renfort annulaire tronco-cylindrique rattachant ladite plaque de base (34), placée radialement à l'extérieur de ladite bague à ouvertures (32) et substantiellement alignée avec l'axe de cette dernière pour dévier les granules de matière plastique, résultant de l'action de découpe desdites première et deuxième pluralités de lames de coupe, passant à travers ladite bague à ouverture (32) vers le bas pour récupération par ledit réservoir de stockage(18).

2. Granulateur selon la revendication 1, comprenant en outre un déflecteur (14) à l'intérieur de ladite goulotte pour au moins partiellement dévier latéralement les déchets solides de matière plastique à réduire tombant vers le bas.

3. Granulateur selon la revendication 1 ou 2, dans lequel les ouvertures (28) dans ladite bague couvrent un angle de 240°.

4. Granulateur selon la revendication 1 ou 2, dans lequel les ouvertures (28) dans ladite bague couvrent un angle de 360°.

5. Granulateur selon l'une quelconque des revendications 1 à 4, dans lequel ladite deuxième pluralité de lames de coupe est supérieure en nombre à ladite première pluralité.

6. Granulateur selon l'une quelconque des revendications 1 à 5, dans lequel lesdites lames de coupe desdites première et deuxième pluralités ont substantiellement la même longueur.

7. Granulateur selon l'une quelconque des revendications 1 à 6, dans lequel lesdites lames de coupe ont une longueur axiale inférieure au quart (1/4) de la longueur transversale dudit rotor.

8. Granulateur selon la revendication 3 ou 4, dans lequel ladite partie à ouvertures de ladite bague est symétrique par rapport à un axe vertical et fait face vers le bas.
